(19) Europäisches Patentamt
European Patent Office
Office européen des brevets

(11) **EP 4 276 673 A1**

(12) **EUROPEAN PATENT APPLICATION**

(43) Date of publication:
**15.11.2023  Bulletin 2023/46**

(21) Application number: **22173095.5**

(22) Date of filing: **12.05.2022**

(51) International Patent Classification (IPC):
**G06F 30/15** (2020.01)     **G06F 30/20** (2020.01)
**G06N 5/00** (2023.01)      **G06F 111/06** (2020.01)

(52) Cooperative Patent Classification (CPC):
**G06F 30/20; G06F 30/15; G06N 5/01;**
G06F 2111/06

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **TOYOTA JIDOSHA KABUSHIKI
KAISHA**
**Toyota-shi, Aichi-ken, 471-8571 (JP)**

(72) Inventor: **LAES, Dieter**
**1140 BRUSSELS (BE)**

(74) Representative: **Cabinet Beau de Loménie
158, rue de l'Université
75340 Paris Cedex 07 (FR)**

(54) **METHOD FOR MULTI-PARAMETER OPTIMIZATION OF A MACHINE PART**

(57)    A computer-implemented method for multi-parameter optimization design parameters of a machine part with regards to output variables ($y_1$, $y_2$), comprising:
S40: identifying a Pareto front in an objective subset (201) of acceptable output values of the output variables;
S50: creating an extended Pareto front (202);
S60: identifying a Pareto input subset (102) of input values that achieve the extended Pareto front (202);
S70: identifying at least one cluster based on the Pareto input subset (102); S80: evaluating an identified cluster, by calculating a NOK-ratio and/or an OK-ratio;
S170: If a first BREAK condition ($c_1$) is not achieved the evaluated cluster, starting back at step S70 for the evaluated cluster;
S90: outputting for an evaluated cluster that meets the BREAK condition, the cluster center value, the cluster variance, the OK-ratio and/or the NOK ratio.

FIG. 5

## Description

### FIELD OF THE DISCLOSURE

The present disclosure is related to a method for multi-parameter optimization, and in particular a method for multi-parameter and multi-objective optimization of the design of at least one machine part.

### BACKGROUND OF THE DISCLOSURE

While computer-implemented optimization methods are massively used in a wide range of fields, such optimization methods are often limited to subsystems or lower-level systems, due to the extreme complexity of global systems, leading to exceedingly costly and computation-intensive global optimization methods.

In particular, in the field of automobile, the design of vehicle parts has to take into account a broad range of requirements including but not limited to manufacturing costs, integration of the part in the vehicle, ease of maintenance, failure risks, lifetime, safety norms, fuel or electric consumption.

Besides, in conventional optimization methods, design tolerances are commonly taken into consideration at the latest phases of the optimization process, once design specifications have been output, by studying deviation from design specifications and their interactions.

Late assessment of design tolerances in conventional optimization methods may only produce design specifications with satisfying design tolerances after a costly and computing-intensive trial and error phase.

As a consequence, there is a need for a method for a multi-parameter and multi-objective optimization method addressing the above problems.

### SUMMARY OF THE DISCLOSURE

An aspect of the invention relates to a computer-implemented method for multi-parameter optimization of at least one machine part, wherein:

> the machine part is to be optimized with respect to at least two output variables; which depend on at least two design parameters of the part based on models expressing each output variable as a function of design parameters;
> a parameter space is defined as a space formed by the at least two design parameters, and an input value is an element of the parameter space;
> an objective space is defined as a space formed by the at least two output variables, and an output value is an element of the objective space;
> an objective subset of acceptable output values is defined;
> the method comprising the steps of:
>
>> S40: identifying a Pareto front in the objective subset, the Pareto front including Pareto-optimal output values;
S50: creating an extended Pareto front comprising output values that are at a lower distance from the Pareto front than a per-output variable distance threshold and which belong to the objective subset;
S60: identifying a Pareto input subset of input values that achieve output values belonging to the extended Pareto front;
S70: identifying at least one cluster in the parameter space, based on the Pareto input subset;
S80: evaluating at least one identified cluster, by calculating a NOK-ratio and/or an OK-ratio, wherein:

> a NOK solution being an output value which does not belong to the objective subset;
> an OK solution being an output value which is in the extended Pareto front;
> the OK-ratio of a cluster represents a proportion of input values of said cluster that achieve an OK solution; and
> the NOK-ratio of a cluster represents a proportion of input values of said cluster that achieve a NOK solution;

S170: If a first BREAK condition for at least one evaluated cluster is not achieved, starting back at step S70 carrying out the cluster identification at step S70 based on the at least one of the evaluated clusters, wherein the first BREAK condition for a cluster is based on at least a NOK-ratio and/or an OK-ratio of the at least one evaluated cluster
S90: for at least one evaluated cluster that meets said first BREAK condition, outputting at least one of a cluster center value, a cluster variance, the OK-ratio and the NOK ratio.

By optimization is understood both minimization and maximization problems. However, since any maximization problem can be turned into a minimization problem, only minimization will be considered without loss of generality.

As a machine part is understood a part of an automobile vehicle. However, the machine part can also refer to a part of an industrial system outside of the field of automobile, and even to a non-physical part such as a software or an algorithm.

A design parameter of a machine part refer to a parameter whose knowledge is required for manufacturing the machine part, including but not limited to the dimensions, shape, weight, material, manufacturing methods, post-treatment.

Output variables of a machine part refer to variables on which performance objectives can be set, and which are linked to design parameters.

The definition of what is a design parameter and what is an output variable is strongly linked to purpose of the optimization method, as one output variable may be considered as an input in a first implementation of an optimization method and as an output in a second implementation of said optimization method, and vice versa.

In the method described above, the parameter space and the objective space can be discrete or continuous spaces. For example, methods for clustering or calculation of a ratio are known for both discrete and continuous space. In a continuous space, ratios may use weights such as probability. Discretization may also be used to transform continuous space into discrete space, which is more adapted to numerical methods. The parameter space and the objective space do not need to be both discrete or both continuous spaces: for example, the objective space may be continuous while the parameter space is discrete.

Therefore, while the ensembles described hereunder are referred to as discrete sets and subsets, it is understood that any kind of discrete or continuous ensemble is meant, including but not limited to sets, intervals, interval unions, interval and set unions.

The objective subset of acceptable values is a set of values of the output variables, which are considered as acceptable for the part, and generally correspond to preferred values for the part. The objective subset is thus a subset of the objective space. By "acceptable values" are understood pre-set values, ranges, combinations of values and ranges which can be reasonably considered in the design of a machine part, excluding output values on the basis that they are not technically, economically or legally feasible, for example.

The Pareto front is known in the field of multi-optimization as the set of Pareto optimal (or Pareto efficient) solutions (The terms 'solution' and 'output value' are used herein interchangeably). Pareto optimal solutions consist in all the solutions which cannot be Pareto dominated. Several criterions can be used for Pareto dominance, such as strong Pareto dominance, strict Pareto dominance and weak Pareto dominance.

By "distance" is understood a mathematical distance. For example, known distances include Minkowski distances, such as the Manhattan distance, the Euclidean distance or the Chebyshev distance, but any other distance may be considered.

By "clustering" is understood the process of grouping elements together so as to form one or more clusters, based on similarities between the elements within a cluster. Numerous clustering algorithms are known and can be considered, including but not limited to Gaussian mixture model clustering.

The models linking the parameter space and the objective space may be determined by prior analysis using meta models, including but not limited to Neural Network, Gaussian Processes or Parametric regression, which are used to span the objective space within the range of acceptable output values.

The extension of the Pareto front to the extended Pareto front of step S50 permits relaxation of the Pareto dominance criterion, as the set of interest is expanded to a subset of dominated yet close-to-optimal solutions included in the objective subset of acceptable values.

The identification of the set of input values that achieve output values of the extended Pareto front in step S60 is of course achieved by means of the models linking the output variables and the design parameters.

Input values that achieve output values means that the output values can be obtained based on the input values via the models. Thereafter, will be referred to output values "achieved" or "output" by values of a subset of the parameter space the corresponding subset in the objective space obtained via the models. When an output value or output set that is output by an input value or an input set is defined, the output is defined via the models.

The identification of at least one cluster, or clustering, of step S70 is achieved based on the subset of input values of the design parameters that achieve the output values of the extended Pareto front. Depending on clustering parameters such as but not limited to the clustering algorithm, the number of clusters to be formed or the computing time, all the values of said set of input values may not necessarily be included in a cluster. Besides, for the same reasons, some input values not included in said subset of input values may also be included in a cluster.

Step S80 defines a criterion for assessing the quality of a cluster, by sorting the input values in three categories.

OK solutions are solutions of the extended Pareto front, which are thus acceptable and close-to-optimal. NOK solutions on the other hand, are "Not OK" solutions which are outside the objective subset, which thus may not be considered as acceptable solutions. The solutions which are neither NOK solutions, nor OK solutions are solutions of the objective subspace that are not in the extended Pareto front. In other words, the solutions which are neither NOK solutions nor OK solutions are acceptable due to being in the objective subspace, but suboptimal due to not being in the extended Pareto front.

For facilitated understanding, solutions which are neither OK solutions nor NOK solutions will be refer to as OK but suboptimal solutions.

By definition, the set of OK solutions, the set of NOK solutions, and the set of OK but suboptimal solutions form a partition of the objective space. In other words, output value of the objective space is included in one and only one of the set of OK solutions, the set of NOK solutions, and the set of OK but suboptimal. Consequently, the set of input values that achieve an OK solution, the set of input values that achieve a NOK solution, and the set of input values that achieve an OK but suboptimal solution form a partition of the parameter space.

The attribute "close-to-optimal" corresponds to an assessment of optimality which depends on the distance metric and the per-output variable distance threshold. A solution that is optimal is a fortiori close-to-optimal.

Step S90 defines the optimization of the clustering under the constraint of minimizing the ratio of non-acceptable solutions and/or of maximizing the ratio of close-to-optimal solutions in a cluster.

As a BREAK condition is understood a predetermined condition for breaking out of a computing loop. A BREAK condition may for example be computing time or memory, objective values for the NOK and/or OK ratios, or a change in ratio between two iterations under a predetermined threshold.

The optimization may be conducted separately for one or more clusters identified in step S80. In order to ensure faster computing, the optimization may be limited to one or more of the most promising clusters, wherein a promising cluster may be manually selected by the operator, or based on a predetermined condition including but not limited to the number of elements, cluster range, distance of the center of the cluster with predetermined output value.

The at least one cluster resulting of step S90 includes by design at least one proper candidate of an input value for designing a machine part.

In a resulting cluster, a wide range of solutions not including NOK solutions as seen from one design parameter can be translated to a high design tolerance with respect to said design parameter. In other words, in the resulting cluster, said design parameter is more permissive to deviation, which facilitates fulfillment of design requirements of said design parameter at lower costs. The same reasoning applies with the same effects for multi-dimension ranges as a combination of ranges of several design parameters. The optimization method permits multi-parameter optimization leading to the identification of values of design parameters leading to machine parts with good performance associated with high tolerance, and shows a significant improve in computing efficiency as compared to classical model-based design optimization methods.

In a resulting cluster, a wide range of OK solutions as seen from one design parameter can be translated to a high design performance with respect to said design parameter. In other words, in the resulting cluster, small deviations of the input value have higher chances of corresponding to close-to-optimal output values, which facilitates design at high performance with regards to the design parameter and at lower costs. The same reasoning applies with the same effects for multi-dimension ranges as a combination of ranges of several design parameters.

In the outputting step S90, information of the cluster center value and the cluster variance provide information respectively on an appropriate combination of design parameter for design of a machine part, and its tolerances with respect to the design parameters, thereby facilitating the design of a machine part, with reduced costs and improved performance.

The variance may be a covariance matrix, which provides detailed information on tolerances with regards to each design parameter.

The output of ratios provide an additional information on the performance and cost of the design solution outputted by the method, thereby facilitating the choice of appropriate design parameters for the design of the machine part.

The method according to the present invention permits robust optimization as a result of the extension of the Pareto front to a robust extended Pareto front, which permits the use of tolerances, through the NOK and OK ratios, as control variables in the performance balancing act. The method according to the present invention makes it easier for an operator to overcome the trade-off between mostly conflicting objectives by providing a distribution of design solutions together with an evaluation of their performance and tolerance.

The method may also include, if a second BREAK condition is not achieved, a step S150 of defining a new extended Pareto front and starting back at step S60.

The output of step S90 may be deemed not satisfactory for example based on inefficient computing, size of the cluster, cluster center value, cluster variance, high NOK-ratio or low OK-ratio of a cluster.

By "high" and "low" are understood subjective values which may be based on predetermined criterions, or which may be evaluated by an operator.

The new extended Pareto front may be defined with a lower distance threshold in step S50, which leads to decreasing the extension of the extended Pareto front, thereby tightening the criterion for identifying OK solutions in a cluster and also decreasing the impact of tolerances as control variables in the performance balancing act, but also reducing computing costs.

The new extended Pareto may also be defined by increasing the distance threshold in step S50, which leads to increasing the extension of the extended Pareto front, thereby loosening the criterion for identifying OK solutions in a cluster and increasing the impact of tolerances as control variables in the performance balancing act, but at the expense of higher computing costs.

The distance threshold may be adapted to ensure that OK ratios are in a range where more relevant information may be conveyed by the assessment of OK ratio of a cluster, both facilitating the clustering process and the decision-making by an operator. For example, OK-ratios that are nearing 0% or 100% throughout the clustering process may not be suited for clustering assessment nor for decision-making of the operator.

The method according to the invention may also include, if a third BREAK condition is not achieved, a step S120 of defining a new objective subset and starting back at step S30.

Widening the objective subset loosens the criterion for rejecting solutions, such that fewer NOK solutions may be considered as NOK solutions, and may instead be considered as OK solutions or OK but suboptimal solutions.

This leads to an increase of the sets of OK solutions and of the OK but suboptimal solutions, thereby increasing the room for clustering and optimization of clustering.

On the other hand, narrowing the objective subset tightens the criterion for rejecting solutions, such that more NOK solutions may be considered as NOK solutions, instead of being considered as OK solutions or OK but suboptimal solutions.

This leads to a decrease of the sets of OK solutions and of the OK but suboptimal solutions, thereby narrowing the room for clustering and optimization of clustering.

The method may also include the steps of carrying out steps S40 to S80 for at least two distance thresholds and/or at least two objective subsets; and wherein steps S90 and S170 are carried out for at least one cluster selected based on the ratios outputted at step S80.

This permits the identification, prior to optimization of the clustering following by step S170, of distance thresholds and objective subsets which may lead to favourable OK-ratio and NOK-ratio values, thereby cutting computing costs by pursuing computing-intensive optimization with the most promising clusters.

In the method according to the invention, in step S90, the at least one cluster of step S70 may be identified based on its size.

The bigger the cluster, the higher its potential for containing design solutions which high tolerances, such that the biggest cluster of step S70 may be considered as a promising candidate for pursuing with the optimization following step S170.

In the method according to the invention, the distance defined in step S50 may be the Mahalanobis distance.

The Mahalanobis distance is a distance which corresponds to the Euclidean distance between two vectors as measured after scaling and decorrelation of the vectors, which is a robust distance metric for representation of distance between correlated output variables. In particular, the Mahalanobis distance is better suited for assessment and comparison of distances in higher dimensions, as it is based on correlation between datasets and not between coordinate values themselves.

In the method according to the invention, the performance of each of the clusters of step S70 may be evaluated based on its covariance matrix, and the clustering of step S90 may only be carried on for clusters with a performance higher than a performance criterion.

The covariance matrix provides information on variance, which corresponds to tolerance with respect to each of the corresponding design parameter. A cluster whose covariance matrix indicates high variances might be considered as a more promising cluster for the optimization following step S170.

Another aspect of the invention relates to a manufacturing method for manufacturing a machine part, comprising optimizing the machine part, using the method according to the invention, and manufacturing the machine part.

In above aspect of the invention, the machine may be a vehicle or a robot.

Yet another aspect of the invention relates a computer-implemented system for multi-parameter optimization, and in some embodiments, manufacturing, of at least one machine part, the system comprising one or more processors and a computer-readable medium; the computer-readable medium comprising computer instructions stored therein, wherein the instructions, when executed by the one or more processors, cause the one or more processors to carry out the steps of one of the multi-parameter optimization and manufacturing methods presented herein.

Yet another aspect of the invention relates to a computer-readable program comprising instructions which, when the program is executed by a computer, cause the computer to carry out the steps of the one of the multi-parameter optimization and manufacturing methods presented herein.

BRIEF DESCRIPTION OF THE DRAWINGS

Fig. 1 is a schematic view representing on a left side the parameter space and on a right side the objective space according to an early stage of the method of the invention.

Fig. 2 is a schematic view representing on a left side the parameter space and on a right side the objective space according to the method of the invention at a stage subsequent to the stage of Fig. 1.

Fig. 3A is a schematic view representing on a left side the parameter space and on a right side the objective space according to the method of the invention at a clustering stage subsequent to the stage of Fig. 2.

Fig. 3B is a pie chart of the NOK, OK and OK but suboptimal ratios corresponding to the cluster of Fig. 3A.

Fig. 4A is a schematic view representing on a left side the parameter space and on a right side the objective space according to the method of the invention at a clustering stage subsequent to the stage of Fig. 2 and with a different cluster than Fig. 3A.

Fig. 4B is a pie chart of the NOK, OK and OK but suboptimal ratios corresponding to the cluster of Fig. 4A.

Fig. 5 is a diagram of the method optimization method according to a first embodiment.

## DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

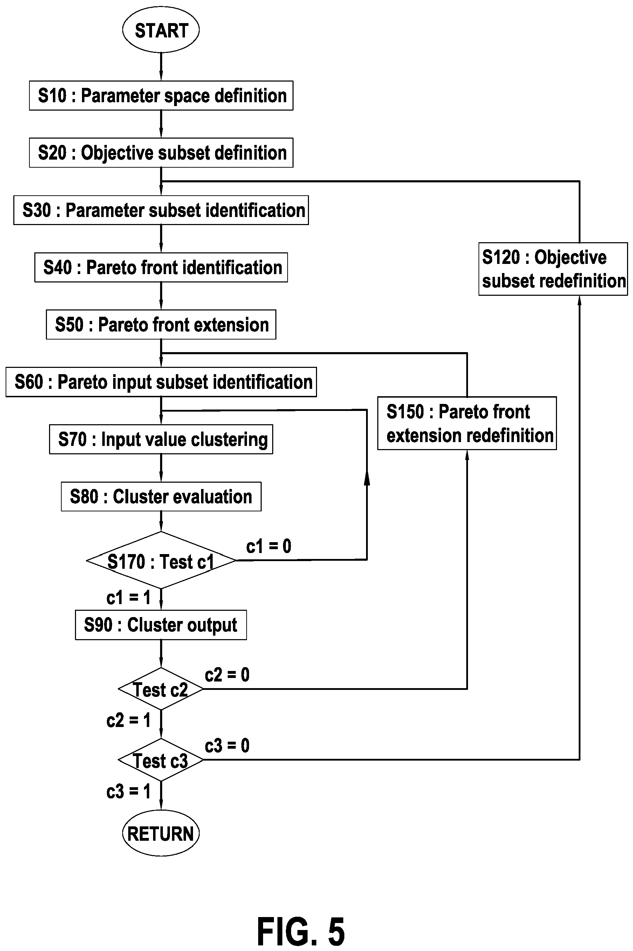

A first embodiment of an optimization method according to the present disclosure will be described step by step with reference essentially to the diagram of Figure 5.

Step S10: Definition of the parameter space and objective space.

The design of a vehicle part starts with the definition of the parameter space 100, with the definition of its corresponding design parameters, and the definition of the objective space 200, with the definition of the corresponding output variables.

In the present disclosure, for example, the method is for optimization of a shaft of a vehicle drivetrain, the corresponding design parameters are a shaft stiffness x1 and a friction coefficient x2 of the shaft with a part the shaft is in contact with, and the corresponding output variables are a vehicle driveability y1 and fuel vehicle consumption y2.

It is understood that the method can be used for any other machine part, design parameter and output variable, as long as a model can be identified which outputs satisfactory values of the output variables based on input values of the design parameters.

In particular, it is understood that the method is adapted for any number of design parameters and/or of output variables, although in the present embodiment, only two design parameters and two output variables are described for facilitated plotting and understanding in 2D-space.

The first design parameter x1 is the torsional stiffness of the shaft, which is commonly expressed in N. m/rad.

The second design parameter x2 is the kinetic friction coefficient between the shaft and a part with a part which the shaft contacts, which is a dimensionless quantity.

The first output variable y1 is a vehicle drivability coefficient, which is a dimensionless quantity which evaluates the ease of driving the vehicle for the user.

The second output variable y2 is a vehicle fuel consumption, which is commonly expressed in liter of fuel per 100 km, or in km per liter of fuel.

The design parameters x1, x2 form the parameter space 100, and the values taken by design parameters x1, x2 are input values.

The output variables y1, y2 form the objective space 200, and the values taken by the output variables y1, y2 are output values.

The values of the design parameters x1, x2 which are considered in the parameter space 100 may be limited to acceptable input values.

The output values can be obtained based on input values by using a model f such that:

$$(y1,y2) = f\,(x1,x2)$$

The model f may be determined by determination of individual models f1, f2 for each output variable y1, y2, for example:

$$y1 = f1(x1,x2),$$

$$y2 = f2(x1,x2)$$

such that

$$(y1,y2) = (f1(x1,x2),f2(x1,x2))$$

It is understood that each output variable may not necessarily depend on all of the design parameters, but at least on one of the design parameters, such that the expression of the model f may be simplified. However, the general case is considered hereunder.

Besides, the design parameters x1, x2 and the output variables y1, y2 may be non-dimensionalized, that is to say that they may each by substituted by a parameter or a variable that has no physical dimension. The design parameters x1, x2 and the output variables y1, y2 may also be scaled.

Based on the model f, it is thus possible to define the image in the objective space 200 of a set in the parameter space 100. The model f might not have an inverse function, for example if two different input values have one identical output value. However, it is possible, based on the knowledge of the model function, to identify at least one input value that achieves a given output value, so as to build an inverse-like multivalued function, which permits the definition of a set in the parameter space 100 that achieves a given set in the objective space 200. While errors and undesired solutions may arise from such approximated methods, they can be filtered out by the subsets and clustering process described hereunder.

S20: Definition of the objective subset

The subset of the set of output values determined at step S10 which only includes the output values considered acceptable is then defined, and forms the objective subset 201 of acceptable output values.

S30: Identification of the subset of input values which achieve output values of the objective subset

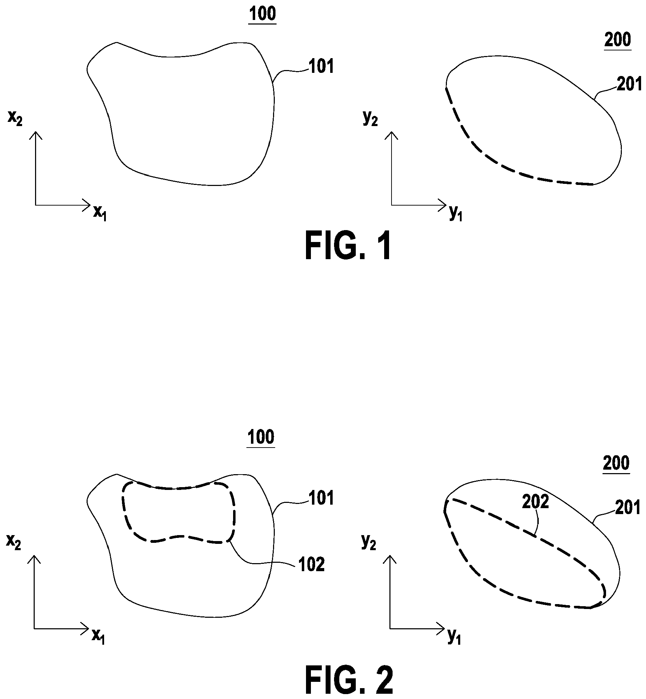

Figs. 1, 2, 3A and 4A are schematic views of the parameter space 100 on the left side, and of the objective space 200 on the right side, at different stages of the optimization method.

Fig. 1 represents an early stage of the optimization method, including the subset of acceptable output values 201, or objective subset 201, in the objective space 200, and the corresponding subset of input values 101, or parameter subset 101.

The parameter subset 101 is defined as the subset of values which achieve the objective subset 201, and can be determined based on the model f.

S40: Identification of the Pareto front

In a minimization problem, the goal is to find the lowest combination of output values, and the corresponding input values.

While a global minimum does not necessarily exist, it is assumed that using physical quantities as output variables, the output variables at least have a local minimum in the objective subset 201.

Generally, numerous local minimums can be found, with a tendency of increasing the number of local minimums by increasing the dimension and thus the size of the subset of acceptable output values.

While it is reasonably easy to identify such local minimums, they are mathematical solution which might not have practical use. For example, local minimums might not be robust. A local minimum is robust when a small variation around the input corresponding to the local minimum value leads to a small variation in the output that might be outside acceptable values.

In the case of non-robust local minimums, and in order to design a satisfying machine part, very low tolerances should be introduced so as to prevent performance from drifting too far away from the desired performance, which would be achieved at increased cost.

It is thus critical to identify, besides local minimums, local minimums or close to minimum values which can achieve acceptable performance with a wide tolerance.

To do so, Pareto-optimal output values are considered in the objective subset 201, defining the Pareto front.

Pareto-optimal output values are defined as the output values which cannot be Pareto dominated by any other output value.

The following three criterions may be used for assessment of Pareto dominance, wherein performance is measured by the minimization with regards to the output variables:

A strong Pareto dominance is a situation in which an output value strictly outperforms another solution with regards to every output variable.

A strict Pareto dominance is a situation in which an output value strictly outperforms another solution with regards to at least one output variable, and does not strictly underperform this other solution with regards to any other output variable.

A weak Pareto dominance is a situation in which an output value outperforms (strictly or not) another solution with regards to every criterion.

In other words, Pareto front represents optimal output solutions which, without additional information on a preference between output variables, are equally valid output solutions.

The Pareto front may be further adapted to exclude some solutions which are considered not to be promising solutions. For instance, extreme solutions may be discarded from the Pareto front, e.g. to exclude first and/or last quantiles of output values of the Pareto front based on at least one output variable, on the basis that these solutions have too unbalanced performances between output variables. Such an exclusion of not promising solutions may also be performed in the extended Pareto front 202 as defined in the following step S50.

Due to the extension of the following step S50 and the clustering of the following step S70, the choice of Pareto dominance criterion has little to no impact on the output result, such that each Pareto dominance criterion may be considered.

In such a case, the strong Pareto dominance criterion may be preferred, as it leads to a Pareto front with fewer elements, which slightly reduces computing time in the following step S50 as compared to Pareto front based on another Pareto dominance criterion.

The Pareto front is represented in a dashed line in Fig. 1.

S50: Extension of the Pareto front to the extended Pareto front

The Pareto front is made of values based on a strict assessment of optimality, rejecting close-to-optimal output values which may lead to reasonably well designed machine parts.

The Pareto front is thus extended to the extended Pareto front 202, so as to include close-to-optimal output values. The extended Pareto front 202 is represented with boundary formed of a dashed line.

The extended Pareto front 202 comprises output values that are at a lower distance from the Pareto front than a per-output variable distance threshold and which belong to the objective subset 201.

The distance of an output value to the Pareto front is the minimum of the distance of the output value with a point of the Pareto front among all the points of the Pareto front.

In other words, an output value is in the extended Pareto front 202 if there is an output value in the Pareto front such that the distance between said output value of the extended Pareto front 202 and said output value of the Pareto front is lower than the per-output variable distance threshold.

The per-output variable distance threshold may be predetermined based on acceptable design performance. The per-output variable distance threshold may also be modified based on experience from running the optimization method. Indeed, a skilled person knows the role and meaning of each output variable and consequently, is able to determine an appropriate value for the per-output variable distance threshold.

For instance, when designing a machine, the acceptable noise level may have to be set (as an example of an output variable). Based on his or her experience, a skilled person could decide that an acceptable noise level, e.g. a noise Sound-Pressure-Level (SPL) should be below 82 dB.

As a distance metric, the Mahalanobis distance may be preferred.

The Mahalanobis distance between two vectors A, B of same dimension is defined as

$$[(A-B)^t M^{-1}(A-B)]^{1/2}, \text{ wherein}$$

The operator "t" in exponent is the transpose operator, the operator "-1" in exponent is the matrix inverse operator, and M is the covariance matrix of vectors A and B.

The use of the inverse of the covariance matrix in the Mahalanobis allows decorrelation and scaling, which prevents the extended Pareto front 202 from preferring one output variable to another one.

S60: Identification of the subset of input values that achieve output values in the extended Pareto front

The extended Pareto front 202 now includes a greater number of close-to-optimal output values.

The Pareto input subset 102 corresponds to the subset of input values that achieve output values in the extended Pareto front 202, may then be determined based on the model f. The Pareto input subset 102 is represented with a boundary formed of a dashed line.

The Pareto input subset 102 includes input values which give close-to-optimal output values. However, the Pareto input subset 102 includes a broad range of input values which makes it difficult to identify an appropriate input value for designing a machine part.

A further operation of refining the input values is achieved by clustering the Pareto input subset 102.

S70: Clustering of the subset of input values

A cluster algorithm is used so as to form one or more clusters based on the Pareto input subset 102.

The cluster algorithm may use, as a starting point, predetermined cluster parameter values. Such predetermined cluster parameter values can for example be values that have been identified by prior experiences as defining a reasonably good set of input values. This allows an operator to seek clustering around output values of interest. This also allows the cluster algorithm to repeat and improve clustering based on a given cluster.

The clustering algorithm may a Gaussian Mixture Model (GMM) clustering algorithm, which forms clusters based on Gaussian distribution, thereby outputting for each cluster a cluster center value and a cluster variance matrix.

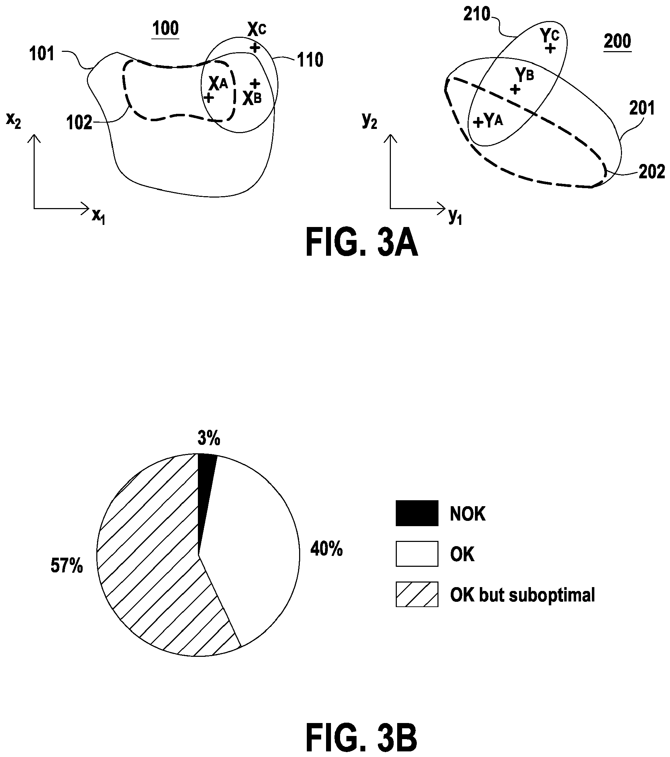

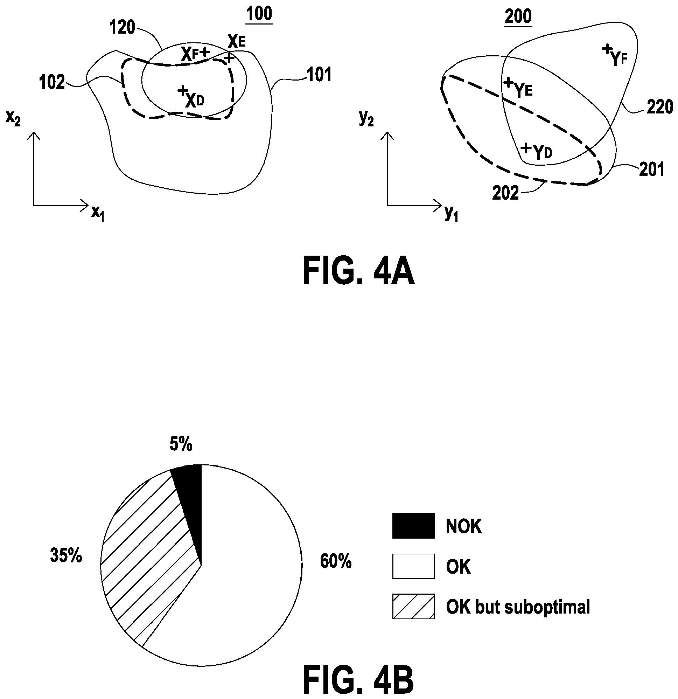

Two examples of clusters are shown respectively in figures 3A and 4A.

The input cluster 110 of Fig. 3A is defined together with its corresponding output cluster 210, which is a determined based on the model f, such that the output cluster 210 is image of the input cluster 110 by the model f.

Three examples of input values XA, XB, XC of the input cluster 110 are represented on Fig. 3A, with their corresponding output values YA=f(XA), YB=f(XB) and YC=f(XC) in the output cluster 220.

The input cluster 120 of Fig. 4A is defined together with its corresponding output cluster 220, which is a determined based on the model f, such that the output cluster 220 is the image of the input cluster 120 by the model f.

Three examples of input values XD, XE, XF of the input cluster 120 are represented on Fig. 4A, with their corresponding output values YD=f(XD), YE=f(XE) and YF=f(XF) in the output cluster 220.

It is noted that the clustering process may include values outside the Pareto input subset 102, and even outside the parameter subset 101, such that the resulting clusters may not be suitable for part design.

Since one or more clusters may be output in step S70, the optimization method may proceed with the subsequent steps for each cluster, either pursuing each of the following steps simultaneously for each cluster, or by running parallel instances of the optimization method for each of the clusters of step S70.

Therefore, while multiple clusters may proceed to the subsequent steps together, the following step S80 and subsequent steps are considered below for one cluster for the sake of simplicity.

It is indeed advantageous that the optimization method provides not one but several different outputs, so as to assist an operator in performing the technical task of selecting relevant and appropriate values of design parameters for designing a machine part.

S80: Cluster evaluation

A resulting cluster of the clustering process of step S70 is then evaluated in step S80. A cluster evaluated in step S80 is referred to as an "evaluated cluster". The evaluation of a cluster is achieved by calculating a NOK-ratio, an OK-ratio and an OK but suboptimal-ratio. The NOK-ratio, the OK-ratio and the OK but suboptimal-ratio are respectively defined as the ratios of NOK solutions, OK solutions and OK but suboptimal solutions achieved by the input values in the evaluated cluster.

NOK solutions are output values which do not belong to the objective subset 201. In other words, NOK solutions are solutions which lead to poor design performance. Input values which achieve NOK solutions are thus not acceptable for machine part design.

OK solutions are output values which belong to the extended Pareto front 202. In other words, OK solutions are solutions which lead to optimal or close-to-optimal design performance.

Solutions which are neither NOK solutions nor OK solutions are OK but suboptimal solutions. OK but suboptimal solutions are acceptable, due to being in the objective subset 201. However, they are not optimal, due to not being in the extended Pareto front 202.

Figures 3B and 4B are pie charts representing examples of OK-ratio, in plain white, NOK-ratio, in plain black, and OK but suboptimal-ratio, in hatched, respectively for the example input cluster 110 of Fig. 3A and the example input cluster 120 of Fig. 4A.

S170: Test c1

A step S170 of performing a test c1 is used to assess whether a cluster identified in step S70 and evaluated in step S80 is acceptable, and whether to proceed with the subsequent step S90 or to repeat the clustering.

If it is determined that the evaluated cluster is acceptable, a handle c1 takes the value c1=1, a corresponding BREAK condition is achieved, and the optimization method proceeds to step S90.

If it is determined that the evaluated cluster is not acceptable, the handle c1 takes the value c1=0, the corresponding BREAK condition is not achieved, and the optimization method start back at step S70.

Step S170 consists in repeating the clustering for said evaluated cluster, in order to achieve the BREAK condition.

The clustering BREAK condition may be based on a NOK-ratio value, an OK ratio value, a cluster size, a cluster covariance matrix, and/or any other criterion which may be used to evaluate the performance of the cluster in the machine part design.

Besides, the BREAK condition may also include any other cluster-based performance indicator and/or be based on a computing-based parameter such as an iteration limit, memory size or any other parameter relating to the performance of the computer and/or machine running the optimization method, so as to stop the clustering when it is determined that the current computing conditions might not lead to a satisfying cluster, or with too high of a computing cost.

In other words, if a cluster is deemed acceptable, the optimization method proceeds to step S90. If the cluster is not deemed acceptable, the optimization method starts back at the clustering of step S70 followed by the evaluation of cluster parameters of step S80, until the parameters are acceptable, until the cluster is acceptable or until a computing-based parameter limit is reached.

If the test c1 involves more than one cluster, the BREAK condition may be considered not achieved if none of the clusters is acceptable, and the and the algorithm may then start back at step S70 for all of the clusters that have been considered not acceptable in the test c1. The BREAK condition may then be considered achieved if all of the clusters are acceptable.

If the test c1 involves more than one cluster, the BREAK condition may also be considered not achieved if at least one of the clusters is not acceptable.

The algorithm may then start again at step S70 for all of the clusters that have been considered not acceptable, and proceed with the subsequent step S90 for the clusters that have been considered acceptable.

The algorithm may also proceed with parallel instances of the algorithm for each individual cluster, starting back at step S70 for each cluster that has been considered not acceptable, and proceeding with the subsequent step S90 for each cluster that has been considered acceptable.

In the reiteration of the clustering of step S70, cluster parameters of an already evaluated cluster may be used as a starting point for identifying a cluster.

S90: Outputting center values, variance, NOK-ratio and OK-ratio in clusters.

Once the cluster is deemed acceptable under the test c1, the cluster center values, the cluster variance matrix, the cluster NOK-ratio, the cluster OK-ratio and/or any other parameter assessing the performance of the cluster values for machine part design is output.

It is then estimated whether the cluster is satisfactory for machine part design under a test c2. If it is considered, by an operator or based on a predetermined condition, that one or all of the cluster parameters is satisfactory for machine part design, a handle c2 takes the value c2=1.

In such a case, the optimization method proceeds to the subsequent step of test c3.

If it is considered that the cluster is not satisfactory for machine part design, the handle c2 takes the value c2=0, and the optimization method proceeds to step S150.

Instead of or in addition to a cluster parameter, a computing-based parameter may also be considered.

S150: Redefining the extended Pareto front

A different distance threshold is defined in step S150 so as to define a new extended Pareto front 202, before starting back at step S60.

The distance threshold may be adapted based on the BREAK condition which has been met in step S80. For example, if a memory limit of a computer running the optimization method has been achieved, the clustering process might have been dealing with too much data and the distance threshold should be reduced in step S150 accordingly. As another example, an OK ratio that is too small might indicate that the distance threshold which is used to define the extended Pareto front 202 is too low, such that close to optimal solutions and suboptimal solutions are poorly differentiated, and the distance threshold should be increased in step S150 accordingly.

It is preferable that the test c2 be stricter than the test c1 with regards to the assessment of a performance parameter of a cluster. Indeed, failing test c1 leads to repeating clustering and evaluation of steps S70 and S80 given an objective subset 201 and an extended Pareto front 202 and by changing cluster parameters.

On the other hand, failing test c2 leads to repeating step S60, and to repeating clustering and evaluation of steps S70 and S80, given an objective subset 201 and by changing the extended Pareto front 202 and cluster parameters. It is thus expected that given an additional handle for optimization in the corresponding loop formed by step S150, the test c2 should be stricter than the test c1.

It is then estimated whether the cluster is satisfactory for machine part design under a test c3.

If it is considered, by an operator or based on a predetermined condition, that one or all of the cluster parameters is satisfactory for machine part design, a handle c3 takes the value c3=1, and the optimization method ends.

The predetermined condition may also be a computing-based parameter.

If it is considered that the cluster parameter is not satisfactory for machine part design, the handle c3 takes the value c3=0, and the optimization method proceeds to step S120.

S120: Redefining the objective subset

A different objective subset 201 is defined in step S120. In other words, the boundary for assessing NOK solutions is changed.

The optimization method then proceeds to step S30.

It is preferable that the test c3 be stricter than the test c2 with regards to the assessment of a performance parameter of a cluster. Indeed, failing test c3 leads to repeating steps S30 to S60, to repeating clustering and evaluation of steps S70 and S80, by changing the objective subset 201, the extended Pareto front 202 and cluster parameters.

It is thus expected that given an additional handle for optimization in the corresponding loop formed by step S150, the test c3 should be stricter than the test c2.

The present method discloses three tests, each associated to a loop such that the loop associated with the test c1 and its corresponding step S170 is included in the loop associated with the test c2 and its corresponding step S150, which is also included in the loop associated with the test c3 and its corresponding step S120.

In such a way, the optimization of a cluster may be performed sequentially with regards cluster parameters, Pareto front extension, and objective subset 201 definition, so as to achieve cluster with satisfying parameters, that is leading to close to optimal solutions and with high tolerances.

Other embodiments

The tests c1, c2 and c3 may not necessarily all be performed, and only one or two among tests c1, c2, c3 may be performed. For example, if it is considered that the objective subset 201 should not be redefined, only the tests c1 and c2 and their associated loops will be performed, and the test c3 will be ignored.

Besides, the cluster output of step S90 has been described as performed after the test c1, and before tests c2 and c3.

However, depending on the tests c1, c2 and c3, this might lead to too much output information for an operator to use, or too little information.

The step S90 may thus be performed before test c1, after test c1 and before test c2, after test c2 and before test c3, and after test c3.

If the step S90 is performed late, in other words subsequent to test c2 or to test c3, it is expected that few clusters will be output, but that the output clusters would have successfully passed strict testing, such that each might provide appropriate design parameter combinations for machine part design.

On the other hand, if the step S90 is performed early, in other words prior to test c1 or prior to test c2, it is expected that numerous clusters will be output, and that not all might provide appropriate design parameter combinations for machine part design as the output clusters would have successfully passed loose testing. However, this would facilitate checking of the state of the optimization method by an operator while the method is running, for example in order to restart the optimization method with more appropriate objective subset 201, Pareto front extension or cluster parameters.

Alternately, steps S20 to S70 of the optimization method may be carried out for at least two distance thresholds and/or at least two objective subsets 201, and carrying out with step S80 for clusters with clusters having performances higher than a performance criterion, wherein the performance criterion may be based on a cluster size, OK-ratio, NOK-ratio.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

In particular, it is understood that the present disclosure herein has been described using two-dimensional parameter space 100 and two-dimensional objective space 200, for facilitated understanding of the method of the present disclosure. It is understood that this method is adapted for any other dimension, and in particular for higher-dimensional spaces.

It is intended that the specification and examples be considered as exemplary only, with a true scope of the disclosure being indicated by the following claims.

## Claims

1. A computer-implemented method for multi-parameter optimization of at least one machine part, wherein:

   the machine part is to be optimized with respect to at least two output variables (y1, y2), which depend on at least two design parameters (x1, x2) of the part based on models (f) expressing each output variable as a function of design parameters (x1, x2);
   a parameter space (100) is defined as a space formed by the at least two design parameters (x1,x2), and an input value is an element of the parameter space (100);
   an objective space (200) is defined as a space formed by the at least two output variables, and an output value is an element of the objective space (200);
   an objective subset (201) of acceptable output values is defined;
   the method comprising the steps of:

      S40: identifying a Pareto front in the objective subset (201), the Pareto front including Pareto-optimal output values;
      S50: creating an extended Pareto front (202) comprising output values that are at a lower distance from the Pareto front than a per-output variable distance threshold and which belong to the objective subset (201);
      S60: identifying a Pareto input subset (102) of input values that achieve output values belonging to the extended Pareto front (202);

      S70: identifying at least one cluster in the parameter space (100), based on the Pareto input subset (102);
      S80: evaluating at least one identified cluster, by calculating a NOK-ratio and/or an OK-ratio, wherein:

         a NOK solution being an output value which does not belong to the objective subset (201);
         an OK solution being an output value which is in the extended Pareto front (202);
         the OK-ratio of a cluster represents a proportion of input values of said cluster that achieve an OK solution; and
         the NOK-ratio of a cluster represents a proportion of input values of said cluster that achieve a NOK solution;

      S170: If a first BREAK condition (c1) for at least one evaluated cluster is not achieved, starting back at step S70 carrying out the cluster identification at step S70 based on the at least one of the evaluated clusters, wherein the first BREAK condition (c1) for a cluster is based on at least a NOK-ratio and/or an OK-ratio of the at least one evaluated cluster;
      S90: for at least one evaluated cluster that meets said first BREAK condition (cl), outputting at least one of a cluster center value, a cluster variance, the OK-ratio and the NOK ratio.

2. The method of claim 1, further comprising, if a second BREAK condition (c2) is not achieved, a step S150 of defining a new extended Pareto front (202) and starting back at step S60.

3. The method of claim 1 or 2, if a third BREAK condition (c3) is not achieved, a step S120 of defining a new objective subset (201) and starting back at step S30.

4. The method of any of claims 1 to 3, comprising the steps of carrying out steps S40 to S80 for at least two distance thresholds and/or at least two objective subsets (201); and wherein steps S90 and S170 are carried out for at least one cluster selected based on the ratios outputted at step S80.

5. The method of any of claim 1 to 4, wherein in step S90, the at least one cluster of step S70 is identified based on its size.

6. The method of any of claims 1 to 5, wherein the distance defined in step S50 is the Mahalanobis distance.

7. The method of any of claims 1 to 6, wherein the performance of each of the clusters of step S70 is evaluated based on its covariance matrix, and the clustering of step S90 is only carried on for clusters with a performance higher than a performance criterion.

8. A manufacturing method for manufacturing a machine part, comprising, optimizing the machine part, using the method of any of claims 1 to 7, and manufacturing the machine part.

9. The method of any of claims 1 to 8, wherein the machine is a vehicle or a robot.

10. A computer-implemented system for multi-parameter optimization or manufacturing of at least one machine part, the system comprising one or more processors and a computer-readable medium;
the computer-readable medium comprising computer instructions stored therein, wherein the instructions, when executed by the one or more processors, cause the one or more processors to carry out the steps of a method according to any one of claims 1 to 9.

11. A computer-readable program comprising instructions which, when the program is executed by a computer, cause the computer to carry out the steps of the method of any of the claims 1 to 9.

**FIG. 1**

**FIG. 2**

**FIG. 3A**

NOK

OK

OK but suboptimal

**FIG. 3B**

FIG. 4A

FIG. 4B

START

S10 : Parameter space definition

S20 : Objective subset definition

S30 : Parameter subset identification

S40 : Pareto front identification

S120 : Objective subset redefinition

S50 : Pareto front extension

S60 : Pareto input subset identification

S150 : Pareto front extension redefinition

S70 : Input value clustering

S80 : Cluster evaluation

S170 : Test c1     $c_1 = 0$

$c_1 = 1$

S90 : Cluster output

Test c2     $c_2 = 0$

$c_2 = 1$

Test c3     $c_3 = 0$

$c_3 = 1$

RETURN

# FIG. 5

Europäisches
Patentamt
European
Patent Office
Office européen
des brevets

# EUROPEAN SEARCH REPORT

**Application Number**

EP 22 17 3095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VIJAYAGOPAL R. ET AL: "Using multiobjective optimization for automotive component sizing", WORLD ELECTRIC VEHICLE JOURNAL, vol. 7, no. 2, 6 May 2015 (2015-05-06), pages 261-269, XP055977276, DOI: 10.3390/wevj7020261 Retrieved from the Internet: URL:https://www.mdpi.com/2032-6653/7/2/261 /pdf> [retrieved on 2022-11-02] * abstract * * page 2, second column * * page 2, section 2.2 * * page 3, first column * * page 6, second column * * page 7, first column * * figures 2, 8 * * tables 1, 2 * * the whole document * ----- | 1-11 | INV. G06F30/15 G06F30/20 G06N5/00 ADD. G06F111/06 |
| X | REBELLO CARINE M. ET AL: "From a Pareto Front to Pareto Regions: A Novel Standpoint for Multiobjective Optimization", MATHEMATICS, vol. 9, no. 24, 7 December 2021 (2021-12-07), page 3152, XP055972827, DOI: 10.3390/math9243152 Retrieved from the Internet: URL:https://www.mdpi.com/2227-7390/9/24/31 52/htm> [retrieved on 2022-10-19] * abstract * * sections 2.2, 2.3, 3.1, 3.6, 4 * * figures 1, 2, 3, 4, 5, 12, 13 * * the whole document * ----- -/-- | 1-11 | **TECHNICAL FIELDS SEARCHED (IPC)** G06F |

The present search report has been drawn up for all claims

| Place of search | Date of completion of the search | Examiner |
|---|---|---|
| Munich | 2 November 2022 | Joris, Pierre |

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 921 371 B1 (ROUBTSOV VLADIMIR [US] ET AL) 5 April 2011 (2011-04-05) * abstract * * figures 2-7, 10 * * column 2, line 55 – column 4, line 61 * * claim 1 * * the whole document * ----- | 1-11 | |
| X | US 2021/241865 A1 (BHATTACHARYA JAYDEEP [US] ET AL) 5 August 2021 (2021-08-05) * abstract * * figures 50-53 * * paragraph [0404] – paragraph [0408] * * the whole document * ----- | 1-11 | |

**TECHNICAL FIELDS SEARCHED (IPC)**

The present search report has been drawn up for all claims

| Place of search | Date of completion of the search | Examiner |
|---|---|---|
| Munich | 2 November 2022 | Joris, Pierre |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 17 3095

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2022

| Patent document cited in search report | | Publication date | Patent family member(s) | | Publication date |
|---|---|---|---|---|---|
| US 7921371 | B1 | 05-04-2011 | NONE | | |
| US 2021241865 | A1 | 05-08-2021 | US | 2021240883 A1 | 05-08-2021 |
| | | | US | 2021240884 A1 | 05-08-2021 |
| | | | US | 2021240885 A1 | 05-08-2021 |
| | | | US | 2021240886 A1 | 05-08-2021 |
| | | | US | 2021241144 A1 | 05-08-2021 |
| | | | US | 2021241859 A1 | 05-08-2021 |
| | | | US | 2021241860 A1 | 05-08-2021 |
| | | | US | 2021241861 A1 | 05-08-2021 |
| | | | US | 2021241862 A1 | 05-08-2021 |
| | | | US | 2021241863 A1 | 05-08-2021 |
| | | | US | 2021241865 A1 | 05-08-2021 |
| | | | WO | 2021155329 A1 | 05-08-2021 |

EPO FORM P0459

For more details about this annex : see Official Journal of the European Patent Office, No. 12/82